(19) Europäisches Patentamt
European Patent Office
Office européen des brevets

(11) EP 1 724 298 A1

(12) **EUROPEAN PATENT APPLICATION**
published in accordance with Art. 158(3) EPC

(43) Date of publication:
**22.11.2006 Bulletin 2006/47**

(21) Application number: **05719335.1**

(22) Date of filing: **21.02.2005**

(51) Int Cl.:
***C08J 9/28*** *(2006.01)* ***H01M 2/16*** *(2006.01)*
***H01M 10/40*** *(2006.01)*

(86) International application number:
**PCT/JP2005/002716**

(87) International publication number:
**WO 2005/080487 (01.09.2005 Gazette 2005/35)**

(84) Designated Contracting States:
**DE FR GB**

(30) Priority: **23.02.2004 JP 2004045665**
**23.02.2004 JP 2004045666**
**03.03.2004 JP 2004058805**
**03.03.2004 JP 2004058807**
**27.09.2004 JP 2004279618**
**27.09.2004 JP 2004279619**

(71) Applicant: **Toyo Boseki Kabushiki Kaisha**
**Osaka-shi,**
**Osaka 530-8230 (JP)**

(72) Inventors:
- **YAMADA, Jun,**
**c/o TOYO BOSEKI KABUSHIKI KAISHA**
**Otsu-shi,**
**Shiga5 200292 (JP)**
- **NAKAMURA, Masanori,**
**TOYO BOSEKI KABUSHIKI KAISHA**
**Otsu-shi,**
**Shiga 5200292 (JP)**
- **INUKAI, Cyuji,**
**c/o TOYO BOSEKI KABUSHIKI KAISHA**
**Otsu-shi,**
**Shiga 5200292 (JP)**
- **NAKAJIMA, Atsushi,**
**TOYO BOSEKI KABUSHIKI KAISHA**
**Otsu-shi,**
**Shiga 5200292 (JP)**

(74) Representative: **Müller-Boré & Partner**
**Patentanwälte**
**Grafinger Strasse 2**
**81671 München (DE)**

(54) **POROUS FILM, PROCESS FOR PRODUCING THE SAME, AND LITHIUM-ION SECONDARY CELL MADE WITH THE SAME**

(57) The present invention provides an inexpensive separator satisfactory in shutdown properties and meltdown properties and having excellent insulating properties. A porous film having a thickness of 5 to 100 μm, **characterized by** including a porous layer of a polyamide-imide resin which has a glass transition temperature of 70°C or higher and an inherent viscosity of 0.5 dl/g or higher and containing a unit represented by the following structural formula (I), the amount of the unit being 20 mol% or more based on all repeating structural units. Also provided is the porous film which is **characterized in that** the porous polyamide-imide resin layer has an amide bond/imide bond ratio of from 10/90 to 45/55. Further more provided is a lithium-ion secondary cell which contains a positive electrode and a negative electrode which are capable of occluding/ releasing lithium ions and either of the porous films disposed as a separator between the electrodes.

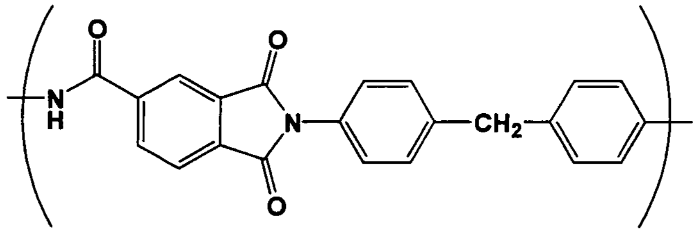

(I)

EP 1 724 298 A1

## Description

### Technical Field

The present invention relates to a polyamide-imide porous film appropriate as a separator of a lithium-ion secondary cell, wherein safety is required to improve, and exhibiting excellent shutdown temperature properties and high meltdown temperature properties, and to a process for producing the same and a lithium-ion secondary cell made with the same.

### Background Art

In recent years, cells having high energy density and high electromotive force have been developed by the progress of electronic portable equipment. Among them, nonaqueous electrolytic cells, particularly, lithium-ion secondary cells have been vigorously developed in view of high electromotive force. One problem of such nonaqueous electrolytic cells is danger due to the use of flammable organic solvent as electrolytic solution. In the case where both electrodes of cells short-circuit to cause decomposition reaction of cell contents, abrupt temperature rise inside cells is occasionally caused to spout out the contents. Against such a problem, presently, a safety valve is installed and a shutdown function is allowed by a separator containing a fusible component.

However, a safety valve is not essential prevention measures against a short circuit but merely relaxes abrupt pressure rise inside cells. On the other hand, a shutdown function of a separator is such that the use of a porous film employing thermofusible materials as a separator of cells stops up holes of the porous film by thermal fusion of the materials to restrain cell reaction as the cause of heat generation by preventing ionic conductivity in the case where temperature inside cells reaches a certain temperature. A porous film made of olefin polymeric materials is disclosed as such a separator in Japanese Patent Publication No. 2642206, Japanese Patent Laying-Open No. 6-212006, Japanese Patent Laying-Open No. 8-138643 and the like. However, in the case of using such thermofusible materials, the film itself is fused to deteriorate isolation between electrodes as an original function thereof when temperature rise is further caused even though a shutdown function operates by heat rise. This is a phenomenon called meltdown that is not preferable as cells. The extension of a range of shutdown temperature is proposed as improvement measures against such a problem. The measures are techniques of laminating and coating thermofusible materials on a porous film and an unwoven fabric substrate, such as described in Japanese Examined Patent Publication No. 4-1692, Japanese Patent Laying-Open No. 60-52, Japanese Patent Laying-Open No. 61-232560 and Japanese Patent Laying-Open No. 10-6453. However, these preparation techniques occasionally become intricate, and it is understood with difficulty that insulating properties during shutdown are sufficient.

### Disclosure of the Invention

### Problems to be Solved by the Invention

The present invention has been made in view of the circumstances and is intended to provide an inexpensive separator satisfactory in shutdown properties and meltdown properties and having excellent insulating properties, instead of a porous film separator conventionally used.

### Means for Solving the Problems

Through earnest studies for achieving the object, the present invention has found out that the use of a porous polyamide-imide resin film singly or in combination with other materials as a separator allows a lithium-ion secondary cell having excellent safety and cycle durability. That is to say, the present invention is the following porous film, process for producing the same and lithium-ion secondary cell made with the same.

A first aspect of the present invention relates to a porous film having a thickness of 5 to 100 μm, characterized by including a porous layer of a polyamide-imide resin having a glass transition temperature of 70°C or higher and an inherent viscosity of 0.5 dl/g or higher and containing a unit represented by the following structural formula (I), an amount of the unit being 20 mol% or more based on all repeating structural units.

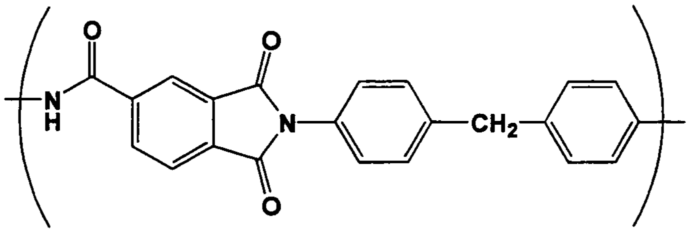

(I)

A second aspect of the present invention relates to a porous film having a thickness of 5 to 100 μm, characterized by including a porous layer of a polyamide-imide resin having a glass transition temperature of 70°C or higher, an inherent viscosity of 0.5 dl/g or higher and an amide bond/imide bond ratio of from 10/90 to 45/55.

The present invention relates to a lithium-ion secondary cell including a positive electrode and a negative electrode capable of occluding/releasing a lithium ion and the porous film according to either of the above disposed as a separator between the electrodes.

The present invention relates to a process for producing a porous film, wherein a polyamide-imide resin solution according to the above is applied on one surface or both surfaces of a substrate, or a substrate is immersed in a polyamide-imide resin solution according to the above, and thereafter the substrate is applied to a solution to be mingled with a solvent for dissolving the polyamide-imide resin and to be a poor solvent for the polyamide-imide resin to then coagulate the polyamide-imide resin.

## Effects of the Invention

The present invention can provide a separator for a lithium-ion secondary cell having excellent balance between shutdown properties and meltdown properties by using a porous film of a polyamide-imide resin having a specific structure or a composite porous film wherein a porous film of a polyamide-imide resin and a polyolefin film are laminated.

## Best Modes for Carrying Out the Invention

The present invention is hereinafter detailed. Among the aspects of the present invention, a polyamide-imide resin used for a first aspect of the present invention as an essential component contains a unit represented by the following structural formula (I).

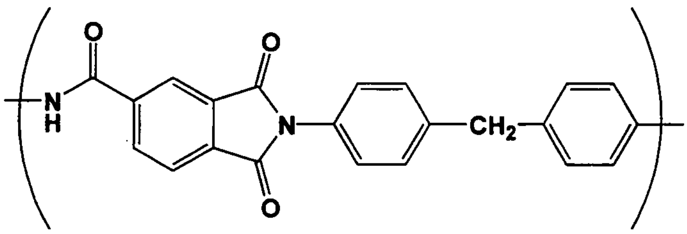

(I)

The unit represented by the following structural formula (I) is preferably contained by 20 to 100 mol%, more preferably 30 to 90 mol% and further more preferably 40 to 80 mol% based on all repeating structural units of the polyamide-imide resin as 100 mol%. When a ratio of the formula (I) is less than 20 mol%, a minute layer may be formed on a surface of a porous film and lead to a deterioration in cycling characteristics of a cell.

A porous film of polyamide-imide can be manufactured by applying a polyamide-imide resin solution on a support such as polyester film and polypropylene, which the support is thereafter immersed in a coagulating bath having water as the main ingredient to remove the solvent and peel the polyamide-imide resin off the support. Then, when a ratio of the structural formula (I) is less than 20 mol%, a minute layer tends to be formed on a surface of a porous film. As a result, gas permeability is decreased and cycling characteristics are deteriorated in using as a separator for a lithium-ion secondary cell, so that the porous film does not function as a separator in an extreme case. On the contrary, when the ratio of the structural formula (I) is 20 mol% or more, a minute layer may be formed with difficulty on a surface of a porous film and lead to favorable cycling characteristics.

Among the aspects of the present invention, a polyamide-imide resin used for a second aspect of the present

invention has desirably an amide bond/imide bond ratio of from 10/90 to 45/55. An amide bond/imide bond ratio referred herein denotes a ratio of the number of both bonds, and the composition of a polyamide-imide resin is determined by NMR analysis to be capable of calculating an amide bond/imide bond ratio from a composition ratio thereof. For example, in the case of a polyamide-imide resin composed of trimellitic acid//4,4'-diphenylmethane diisocyanate = 100//100 (molar ratio), amide bond and imide bond are the same in number, so that a ratio thereof is 50/50. In the case of trimellitic acid/benzophenone tetracarboxylic acid//4,4'-diphenylmethane diisocyanate = 60/40//100 (molar ratio), a ratio of amide bond and imide bond included in a trimellitic acid structure division is 50/50 and a ratio of amide bond and imide bond included in a benzophenone tetracarboxylic acid structure division is 0/100, so that amide bond/imide bond is

$$(50\times0.6+0\times0.4)/(50\times0.6+100\times0.4) = 30/70.$$

When a ratio of amide bond is more than 45, the electrolytic resistance may be deteriorated, when a ratio of amide bond is less than 10, solvent solubility may be deteriorated and lead to difficulty in forming a uniform porous film.

A polyamide-imide resin used for the present invention is manufactured by methods such as an isocyanate method of manufacturing from an acid component and an isocyanate component, an acid chloride method of manufacturing from acid chloride and amine or a direct method of manufacturing from an acid component and an amine component; an isocyanate method is preferable in view of manufacturing costs.

The acid component used for synthesizing a polyamide-imide resin has trimellitic anhydride (chloride) as the main ingredient, and a part thereof can be substituted with other polybasic acids or anhydrides thereof. The ratio of amide bond/imide bond can thereby be adjusted in a second aspect of the present invention.

Examples thereof include tetracarboxylic acids and anhydrides thereof such as pyromellitic acid, biphenyltetracarboxylic acid, biphenyl sulfontetracarboxylic acid, 3,3',4,4'-benzophenone tetracarboxylic acid, 3,3',4,4'-biphenyl ether tetracarboxylic acid, ethylene glycol bistrimellitate and propylene glycol bistrimellitate, aliphatic dicarboxylic acids such as oxalic acid, adipic acid, malonic acid, sebacic acid, azelaic acid, dodecanedicarboxylic acid, dicarboxypolybutadiene, dicarboxypoly(acrylonitrilebutadiene) and dicarboxypoly(styrene-butadiene), alicyclic dicarboxylic acids such as 1,4-cyclohexanedicarboxylic acid, 1,3-cyclohexanedicarboxylic acid, 4,4'-dicyclohexylmethanedicarboxylic acid and dimer acid, and aromatic dicarboxylic acids such as terephthalic acid, isophthalic acid, diphenyl sulfone-4,4'-dicarboxylic acid, diphenyl ether-4,4'-dicarboxylic acid and naphthalene dicarboxylic acid. Among these, dicarboxypolybutadiene, dicarboxypoly(acrylonitrile-butadiene) and dicarboxypoly(styrene-butadiene) having a molecular weight of 1000 or more are preferable in view of shutdown properties. In a second aspect of the present invention, a part of an acid component is preferably one kind, or two kinds or more of alkylene glycol bisanhydrotrimellitate, pyromellitic anhydride, benzophenone tetracarboxylic anhydride and biphenyltetracarboxylic anhydride, and is preferably substituted by 1 to 60 mol% based on an acid component as 100 mol%.

A part of trimellitic anhydride can also be substituted with glycol to introduce an urethane group into a molecule. Examples of glycol include alkylene glycols such as ethylene glycol, propylene glycol, tetramethylene glycol, neopentyl glycol and 1,6-hexanediol, polyalkylene glycols such as polyethylene glycol, polypropylene glycol and polytetramethylene glycol, and hydroxyl terminated polyester synthesized from one kind, or two kinds or more of the dicarboxylic acids and one kind, or two kinds or more of the glycols; among these, polyethylene glycol and hydroxyl terminated polyester are preferable in view of shutdown effect. The number-average molecular weight thereof is preferably 500 or more, more preferably 1000 or more. The upper limit thereof is not particularly limited and preferably less than 8000.

In the above, a part of an acid component is desirably substituted with at least one kind selected from the group consisting of dimer acid, polyalkylene ether, polyester and butadiene rubber containing any of a carboxyl group, a hydroxyl group and an amino group at a terminal, and is preferably substituted by 1 to 60 mol% based on an acid component as 100 mol%.

A coagulating bath used in manufacturing a porous film of the present invention preferably accommodates a solution composed mainly of water. A diamine (diisocyanate) component used for synthesizing a polyamide-imide resin of the present invention preferably contains 4,4'-diphenylmethanediamine or diisocyanate thereof as an essential component. The use of this component can prevent a minute layer from being formed on a surface of a porous film to facilitate control of a film structure in manufacturing a porous film. That is, in the case of a polyamide-imide resin having a rigidly hydrophobic skeleton, an addition agent such as polyethylene glycol occasionally needs to be contained in resin varnish and a coagulating tank for controlling a film structure; however, the introduction of a skeleton of the 4,4'-diphenylmethanediamine facilitates control of a film structure, so that this addition agent can be decreased in quantity or made unnecessary. Examples of other usable diamine (diisocyanate) components include aliphatic diamines and diisocyanates thereof such as ethylenediamine, propylenediamine and hexamethylenediamine, alicyclic diamines and diisocyanates thereof such as 1,4-cyclohexanediamine, 1,3-cyclohexanediamine, isophorone diamine and 4,4'-dicyclohexylmethanediamine, and aromatic diamines and diisocyanates thereof such as phenylenediamine, 4,4'-diaminodiphenylinethane,

4,4'-diaminodiphenyl ether, 4,4'-diaminodiphenyl sulfone, benzidine, xylylenediamine and tolylenediamine; among these, tolidine, tolylenediamine, 1,5-naphthalenediamine and diisocyanates thereof are preferable in view of reactivity, costs and electrolytic resistance.

A polyamide-imide resin used for the present invention can be manufactured by being stirred in polar solvents such as N,N'-dimethylformamide, N,N'-dimethylacetamide, N-methyl-2-pyrrolidone and γ-butyrolactone while heated at 60 to 200°C. In this case, amines such as triethylamine and diethylenetriamine, and alkali metal salts such as sodium fluoride, potassium fluoride, cesium fluoride and sodium methoxide can also be used as a catalyst at need.

A polyamide-imide resin used for the present invention preferably has a glass transition temperature of 70°C or higher and an inherent viscosity of 0.5 dl/g or higher. A glass transition temperature of less than 70°C allows shutdown effect but decreases meltdown temperature to bring a possibility that a positive electrode and a negative electrode cause a short circuit in the case of being used for a separator. An inherent viscosity of less than 0.5 dl/g occasionally embrittles the resin to deteriorate mechanical properties of a porous film. As a result, cracks are easily caused in a porous film during the processing of a porous film and the assembling of a cell to bring a possibility that a positive electrode and a negative electrode cause a short circuit. On the other hand, it is preferable that an inherent viscosity is less than 2.0 dl/g and a glass transition temperature is less than 400°C in consideration of processability and solvent solubility.

Next, a process for producing a polyamide-imide porous film is described. A process for producing a porous film of the present invention is not particularly limited, and it is preferable that the polyamide-imide polymerization solution is coated with a predetermined thickness on a substrate such as polyester film, or the polymerization solution is extruded in the shape of film from a slit die, and thereafter is applied to a solution to be mingled with a solvent for dissolving the polyamide-imide resin and to be a poor solvent for the polyamide-imide resin to then coagulate the polyamide-imide resin. The substrate may be immersed in the polyamide-imide polymerization solution to coagulate in the same manner. A poor solvent herein referred denotes a solvent incapable of dissolving the polyamide-imide resin at a temperature of 25°C and a concentration of 5 % by weight.

A solvent for dissolving a polyamide-imide resin preferably contains, as a main constituent, amide solvents such as N-methyl-2-pyrrolidone, dimethylacetamide and N,N-dimethylformamide as described above. Therefore, a substantial coagulating bath preferably accommodates a solution contains water as a main constituent. Water used herein is preferably water having few ionic impurities in consideration of properties as a separator, and water such as ion-exchanged water wherein ions are intentionally removed is preferably used. Ionic impurities are preferably 500 ppm or less at each ion, more preferably 200 ppm or less and most preferably 100 ppm or less.

Other solvents to be mingled with water can be mixed in this coagulating bath for adjusting coagulation rate and pore diameter of a porous film and distribution thereof. Examples of such solvents include alcohols such as methanol, ethanol, isopropyl alcohol, ethylene glycol, propylene glycol, diethylene glycol and polyethylene glycol, ketones such as acetone and methyl ethyl ketone, and amide solvents such as N,N-dimethylformamide, N,N-dimethylacetamide and N-methyl-2-pyrrolidone; among these, glycols such as ethylene glycol and polyethylene glycol are preferable in view of uniformity of pore diameter in a porous film. The added amount is not limited and preferably 5 to 500 parts by weight, more preferably 10 to 400 parts by weight and most preferably 20 to 300 parts by weight based on100 parts by weight of water. A coagulating bath may be one bath or a multitude of bathes for adjusting coagulation rate and pore diameter of a porous film and distribution thereof. Then, the concentration of an addition agent to water is preferably modified in each bath. The temperature of a coagulating bath is preferably in a range of 10 to 40°C. Step of washing a porous film after being coagulated in water and acetone is preferably included.

An addition agent may be used for a polyamide-imide resin solution for adjusting coagulation rate and pore diameter of a porous film and distribution thereof. Examples thereof include alcohols such as methanol, ethanol, isopropyl alcohol, ethylene glycol, propylene glycol, diethylene glycol and polyethylene glycol, ketones such as acetone and methyl ethyl ketone, and water-soluble polymers such as polyethylene glycol and polyvinyl pyrrolidone. The added amount is not limited and preferably 5 to 300 parts, more preferably 10 to 200 parts and most preferably 20 to 100 parts based on100 parts of the resin solution.

A polyamide-imide porous film of the present invention may be a monolayer or a lamination layer, and the overall film thickness is 5 to 100 μm, preferably 10 to 70 μm and more preferably 15 to 50 μm. A film thickness of 5 μm or less brings a possibility of weakening and breaking the film. On the contrary, a film thickness more than 100 μm occasionally deteriorates cycling characteristics as a cell. The porosity of a polyamide-imide porous film is preferably 30 to 90 %, more preferably 40 to 70 %. A porosity of 30 % or less increases electric resistance of the film to pass a large electric current therethrough with difficulty. On the other hand, a porosity of 90 % or more weakens film strength. With regard to the gas permeability of a porous film as a criterion for pore diameter, a value measured by a process in conformity to JIS-P8117 is preferably 1 to 2000 sec/100ccAir, more preferably 50 to 1500 sec/100ccAir and further more preferably 100 to 1000 sec/100ccAir. Occasionally, a gas permeability of less than 1 sec/100ccAir weakens film strength, while a gas permeability of more than 2000 sec/100ccAir deteriorates cycling characteristics.

A polyamide-imide porous film thus manufactured exhibits excellent shutdown properties and meltdown properties even in the case of being singly used as a separator. In particular, the effect is notable in the case of a porous

film composed of a polyamide-imide resin wherein butadiene rubber, polyalkylene glycol and polyester having a number-average molecular weight of 1000 or more are copolymerized in blocks. The upper limit of the number-average molecular weight is preferably less than 8000 in consideration of a glass transition temperature of the polyamide-imide resin.

Another characteristic of the present invention is to be capable of using a polyamide-imide porous film in lamination and combination with a polyolefin porous film. A polyolefin porous film is one which is manufactured from polyethylene and polypropylene film by a drawing opening method and a phase separation method such as is described in the summary 1BIL09 of 7th polymer material forum (1998). The constitution in the case of laminating a polyamide-imide porous film with a polyolefin porous film is A/B, A/B/A or B/A/B, regarding a polyamide-imide porous film and a polyolefin porous film as A and B, respectively. Examples of polyolefin resin include α-olefins such as polyethylene and polypropylene, polybutadiene and ionomer thereof. A polyolefin porous film may be a lamination type or a layer composition such as polypropylene/polyethylene/polypropylene.

The manufacture of these composite porous films also is not particularly limited and the following processes are preferable.

(1)
A polyamide-imide porous film and a polyolefin porous film are simply superposed.
(2)
A polyamide-imide resin solution is applied on one surface or both surfaces of a polyolefin porous film as a support, or a polyolefin porous film is immersed in a polyamide-imide resin solution, and applied to a coagulating bath and then coagulated in the same manner as the above.
(3)
The (1) and (2) are combined.

In these composite porous films, the overall film thickness is preferably 5 to 100 μm, more preferably 1 to 100 μm, and still more preferably 15 to 70 μm.Preferably, the porosity is 30 to 80 % and a gas permeability is 1 to 2000 sec/100ccAir.

A lithium-ion secondary cell wherein a polyamide-imide porous film of the present invention thus constituted is used as a separator offers the same cell performance as conventionally and has so excellent shutdown properties and meltdown properties as to be safe. A lithium-ion secondary cell according to the present invention can be manufactured in accordance with an ordinary method except for using a porous film of the present invention as a separator.

That is to say, for example, materials containing lithium can be used as a positive electrode active material, materials capable of occluding/releasing lithium as ions can be used as a negative electrode, and an organic solvent solution of an electrolyte composed of a compound containing lithium and fluorine can be used as an electrolytic solution.

Specifically, lithium metallic oxides such as lithium cobaltate and lithium manganate capable of inserting/separating lithium ions can be used as a positive electrode active material. For a positive electrode active material, known activated carbon, various cokes, carbon black, binding agent and solvent can be blended as conductive agent to apply and dry this fluid dispersion to a current collector such as aluminum and then obtain a positive electrode material.

Coke, graphite and amorphous carbon can be used as a negative electrode active material to apply and dry fluid dispersion composed of these, binding agent and organic solvent to a current collector such as copper foil and then obtain a negative electrode material.

Examples of an electrolyte to be used for an electrolytic solution include $LiClO_4$, $LiAsF_6$, $LiPF_4$, $LiBF_4$, LiBr and $LiCF_3SO_3$, and examples of an organic solvent to be used include one kind, or two kinds or more of propylene carbonate, ethylene carbonate, γ-butyrolactone, dimethyl carbonate, ethyl methyl carbonate, 1,2-dimethoxyethane, 1,2-diethoxyethane and tetrahydrofuran.

## Examples

The present invention is explained hereinafter in detail further with examples, but is not limited to these examples. Measured values in examples were measured in the following manner.

Inherent viscosity: 0.5 g of a polyamide-imide resin was dissolved in 100 ml of N-methyl-2-pyrrolidone to keep the solution at a temperature of 30°C and measure by using Ubbelohde viscosity tube.

Glass transition temperature: Glass transition temperature was measured in such a manner that an oscillation having a frequency of 110 Hz was supplied to a polyamide-imide film having a measurement width of 4 mm and a length of 15 mm by using DVE-V4 Rheospectoler manufactured by Rheologies Inc. At a turning point of preserved elastic modulus (E'), the temperature at an intersection point of an extended line of a base line at a glass transition temperature or lower and a tangential line offering maximum inclination at a turning point or further was regarded as a glass transition temperature.

Film thickness: Film thickness was measured by SONY μ-meter.

Porosity: the average film thickness (At) of an approximately 25 μm-film (A) prepared by casting and drying from a polyamide-imide resin solution and the weight (Aw) of a 10 cm×10 cm-film were measured to calculate porosity from the average film thickness (Bt) of a porous film (B) prepared from the same polyamide-imide resin solution and the weight (Bw) of a 10 cmx 10 cm-porous film by the following expression.

$$\text{Porosity (\%)} = [1-(Bw/Bt)/(Aw/At)]\times 100$$

Shutdown temperature and meltdown temperature: Shutdown temperature and meltdown temperature were measured at an alternating frequency of 1 kHz, an alternating amplitude of 100 mV and a rate of temperature rise of 2°C/minute by using a porous film filled up with a solution wherein lithium tetrafluoroborate was dissolved by 1 mol/l in propylene carbonate. A temperature at a time when the rise of impedance value in accordance with temperature rise became 100 $\Omega cm^2$ once was regarded as a shutdown starting temperature, and a temperature at a time when impedance value exceeded 1 $k\Omega cm^2$, rose further and thereafter lowered again to 1 $k\Omega cm^2$ was regarded as a meltdown temperature.

Resin composition: $^1$H-NMR analysis was performed in dimethyl sulfoxide D6 solution by using nuclear magnetic resonance analyzer (NMR) Gemini 200 manufactured by Varian, Inc. to determine from ratio of integrations thereof.

Amide bond/imide bond ratio: a ratio of amide bond and imide bond was calculated from the resin composition.

[Example 1]

1 mol of trimellitic anhydride, 0.5 mol of 1,5-naphthalene diisocyanate, 0.49 mol of 4,4'-diphenylmethane diisocyanate and 0.02 mol of potassium fluoride were charged together with N-methyl-2-pyrrolidone into a four-necked flask with a thermometer, a cooling pipe and a nitrogen gas inlet tube so as to meet a solid content concentration of 20 %, stirred at a temperature of 120°C for 5 hours, and thereafter diluted with N-methyl-2-pyrrolidone so as to meet a solid content concentration of 15 % to synthesize a polyamide-imide resin. The inherent viscosity of the obtained polyamide-imide resin was 1.08 dl/g, the glass transition temperature was 320°C, the structural formula (I) was 50 mol% and the amide bond/imide bond ratio was 50/50.

100 parts of the polyamide-imide resin solution was blended with 20 parts of polyethylene glycol (a number-average molecular weight of 400), applied on one surface of a polyolefin porous film (a thickness of 25 μm) manufactured by TonenGeneral Sekiyu K.K. so as to meet a dried film thickness of 1 μm, immersed in water, and coagulated, washed and dried. The film thickness of this composite porous film was 26 μm, the gas permeability was 460 sec/100ccAir, the shutdown temperature was 122°C and the meltdown temperature was 200°C or higher. A coin cell was prepared by using this composite porous film for a separator, using a positive electrode wherein lithium cobaltate was used as a positive electrode active material, acetylene black was used as a conductive agent and polyvinylidene fluoride was used as a binder, using a negative electrode wherein graphite and amorphous carbon were mixed for a negative electrode active material and polyvinylidene fluoride was used as a binder, and using Sol-Rite (manufactured by Mitsubishi Chemical Corporation) as an electrolytic solution to then evaluate cell characteristics thereof. As a result, service capacity and cycling characteristics both exhibited approximately equal performance to a commercial separator (a polyolefin porous film manufactured by TonenGeneral Sekiyu K.K.: 25 μm).

[Example 2]

Instead of an acid component of Example 1, 0.9 mol of trimellitic anhydride, 0.1 mol of benzophenone tetracarboxylic anhydride, 1.0 mol of 4,4'-diphenylmethane diisocyanate and 0.02 mol of potassium fluoride were charged together with N-methyl-2-pyrrolidone so as to meet a solid content concentration of 20 %, stirred at a temperature of 100°C for 3 hours, and thereafter diluted with N-methyl-2-pyrrolidone so as to meet a solid content concentration of 15% while cooled to obtain a polyamide-imide resin. The glass transition temperature of this polyamide-imide resin was 300°C, the inherent viscosity was 1.23 dl/g, the structural formula (I) was 90 mol% and the amide bond/imide bond ratio was 45/55.

The polyamide-imide resin solution was applied on one surface of a polyolefin porous film (25 μm) manufactured by TonenGeneral Sekiyu K.K. so as to meet a dried film thickness of 1 μm, immersed in water, and coagulated, washed and dried to prepare a composite porous film having a film thickness of 26 μm. The gas permeability thereof was 420 sec/100ccAir, the shutdown temperature was 120°C and the meltdown temperature was 200°C or higher.

[Example 3]

A polyamide-imide resin was synthesized on the same conditions as Example 1 except for replacing an acid component of Example 1 with 0.92 mol of trimellitic anhydride, 0.08 mol of a poly(acrylonitrile-butadiene) copolymer with

dicarboxylic acid at each end (Hiker CTBN1300×13 manufactured by Ube Industries, Ltd.), 0.7 mol of 1,5-naphthalene diisocyanate, 0.29 mol of 4,4'-diphenylmethane diisocyanate and 0.02 mol of potassium fluoride. The inherent viscosity of the obtained polyamide-imide resin was 0.69 dl/g, the glass transition temperature was 180°C and the content of the structural formula (I) was 27 mol%. A composite porous film was prepared from this polyamide-imide resin solution in the same manner as Example 1. The film thickness of this composite porous film was 28 μm, the gas permeability was 410 sec/100ccAir, the shutdown temperature was 123°C and the meltdown temperature was 200°C or higher.

[Example 4]

0.93 mol of trimellitic anhydride, 0.07 mol of polycaprolactone (Placcel 220: a number-average molecular weight of 2000, manufactured by Daicel Chemical Industries, Ltd.), 0.5 mol of 1,5-naphthalene diisocyanate, 0.49 mol of diphenylmethane-4,4'-diisocyanate and 0.02 mol of potassium fluoride were charged together with N-methyl-2-pyrrolidone by using the same apparatus as Example 1 so as to meet a solid content concentration of 20 %, and reacted at a temperature of 120°C for approximately 5 hours. The inherent viscosity of the obtained polyamide-imide resin was 0.82 dl/g, the glass transition temperature was 230°C, the structural formula (I) was 46 mol% and the amide bond/imide bond ratio was 50/50. A porous film was prepared by using this polyamide-imide resin solution in the same manner as Example 1. The film thickness of this porous film was 27 μm, the gas permeability was 410 sec/100ccAir, the shutdown temperature was 122°C and the meltdown temperature was 200°C or higher.

[Example 5]

A solution wherein 100 parts of the polyamide-imide resin solution of Example 3 was blended with 20 parts of ethylene glycol was applied on a polyester film of 100 μm, immersed in water, coagulated, peeled off the polyester film, and washed in water and dried to obtain a polyamide-imide porous film having a thickness of 20 μm. The porosity of this porous film was 65 %, the gas permeability was 6.5 sec/100ccAir, the shutdown temperature was 188°C and the meltdown temperature was 200°C or higher. Cell performance such as service capacity and cycle durability of a coin cell wherein this polyamide-imide porous film was used for a separator with the same constitution as Example 1 exhibited similar properties to the case of a polyolefin porous film-alone separator.

[Example 6]

A polyolefin porous film (25 μm) manufactured by TonenGeneral Sekiyu K.K. was immersed in varnish wherein 100 parts of the polyamide-imide resin solution of Example 1 was blended with 20 parts of polyethylene glycol (a number-average molecular weight of 400), and thereafter both surfaces of the polyolefin porous film were scraped off with a squeeze roll so as to meet a dried film thickness of 1 μm each, applied to a coagulating bath such that water/polyethylene glycol (a number-average molecular weight of 400) ratio was 70/30, and coagulated, washed and dried to obtain a three-layer composite porous film having a thickness of 27 μm. The shutdown temperature of this composite porous film was 120°C and the meltdown temperature was 200°C or higher. Cell performance such as service capacity and cycle durability of a coin cell prepared by using this composite porous film for a separator with the same constitution as Example 1 exhibited similar properties to the case of a polyolefin porous film-alone separator.

[Example 7]

Cell performance such as service capacity and cycle durability of a coin cell wherein a composite film such that a polyolefin porous film was superposed on the polyamide-imide porous film of the composite porous film of polyamideimide/polyolefin prepared in Example 6 was prepared on the same conditions as Example 1 exhibited approximately equal properties to the case of a polyolefin porous film-alone separator.

[Example 8]

0.3 mol of trimellitic anhydride (TMA), 0.7 mol of ethylene glycol bisanhydrotrimellitate, 1 mol of diphenylmethane-4,4'-diisocyanate (MDI) and 0.02 mol of potassium fluoride were charged together with N-methyl-2-pyrrolidone into a four-necked flask with a thermometer, a cooling pipe and a nitrogen gas inlet tube so as to meet a solid content concentration of 25 %, stirred at a temperature of 130°C for 5 hours, and thereafter diluted with N-methyl-2-pyrrolidone so as to meet a solid content concentration of 10 % to synthesize a polyamide-imide resin. The inherent viscosity of the obtained polyamide-imide resin was 0.68 dl/g and the glass transition temperature was 255°C. The resin composition was TMA/ethylene glycol bistrimellitate//MDI = 30/70//100 (molar ratio), the structural formula (I) was 70 mol% and the amide bond/imide bond ratio was 15/85.

A solution wherein 100 parts of this polyamide-imide resin solution was blended with 20 parts of polyethylene glycol (a number-average molecular weight of 400) was applied on a commercial separator (a polyolefin porous film manufactured by TonenGeneral Sekiyu K.K.: 25 μm) so as to meet a film thickness of 1 μm, immersed in water of 25°C for approximately 3 minutes, and thereafter dried at a temperature of 100°C for 10 minutes while fixed by a metal mold. The thickness of the obtained polyamide-imide composite porous film was 26 μm, the gas permeability was 340 sec/100ccAir, the shutdown temperature was 120°C and the meltdown temperature was 200°C or higher. A coin cell was prepared by using this porous film for a separator, using a positive electrode wherein lithium cobaltate was used as a positive electrode active material, acetylene black was used as a conductive agent and polyvinylidene fluoride was used as a binder, using a negative electrode wherein graphite and amorphous carbon were mixed for a negative electrode active material and polyvinylidene fluoride was used as a binder, and using Sol-Rite (manufactured by Mitsubishi Chemical Corporation) as an electrolytic solution to then evaluate cell characteristics thereof. Service capacity and cycling characteristics both exhibited approximately equal performance to a commercial separator (a polyolefin porous film manufactured by TonenGeneral Sekiyu K.K.: 25 μm).

[Example 9]

Instead of an acid component of Example 8, 0.9 mol of TMA, 0.1 mol of 3,3',4,4'-benzophenone tetracarboxylic anhydride, 1.0 mol of diphenylmethane-4,4'-diisocyanate and 0.02 mol of potassium fluoride were charged together with N-methyl-2-pyrrolidone so as to meet a solid content concentration of 20 %, stirred at a temperature of 100°C for 3 hours, and thereafter diluted with N-methyl-2-pyrrolidone so as to meet a solid content concentration of 10 % while cooled to obtain a polyamide-imide resin. The glass transition temperature of this polyamide-imide resin was 300°C and the inherent viscosity was 1.23 dl/g. The resin composition was TMA/benzophenone tetracarboxylic acid//MDI = 90/10//100 (molar ratio), the structural formula (I) was 90 mol% and the amide bond/imide bond ratio was 45/55.

With regard to a composite porous film having a film thickness of 26 μm prepared by using this polyamide-imide resin solution in the same manner as Example 8, the gas permeability thereof was 420 sec/100ccAir, the shutdown temperature was 120°C and the meltdown temperature was 200°C or higher.

[Example 10]

0.74 mol of TMA, 0.2 mol of biphenyltetracarboxylic anhydride, 0.06 mol of polypropylene glycol having a number-average molecular weight of 2000, 1.02 mol of isophorone diisocyanate and 0.02 mol of potassium fluoride were charged together with γ-butyrolactone by using the same apparatus as Example 8 so as to meet a solid content concentration of 50 %, reacted at a temperature of 180°C for 5 hours, and thereafter diluted with N,N'-dimethylacetamide so as to meet a solid content concentration of 10 % to synthesize a polyamide-imide resin. The inherent viscosity of the obtained polyamide-imide resin was 0.63 dl/g and the glass transition temperature was 198°C. The resin composition was TMA/biphenyltetracarboxylic acid/polypropylene glycol//MDI = 74/20/6//100 (molar ratio), the structural formula (I) was 74 mol% and the amide bond/imide bond ratio was 39/61.

A composite porous film was prepared from this polyamide-imide resin solution in the same manner as Example 8. The thickness of this porous film was 27 μm, the gas permeability was 410 sec/100ccAir, the shutdown temperature was 122°C and the meltdown temperature was 200°C or higher.

[Example 11]

0.8 mol of TMA, 0.15 mol of pyromellitic anhydride, 0.05 mol of polycaprolactone (Placcel 220: a number-average molecular weight of 2000, manufactured by Daicel Chemical Industries, Ltd.), 0.5 mol of isophorone diisocyanate (IPDI), 0.5 mol of diphenylmethane-4,4'-diisocyanate and 0.02 mol of potassium fluoride were charged together with N-methyl-2-pyrrolidone by using the same apparatus as Example 8 so as to meet a solid content concentration of 50 %, reacted at a temperature of 180°C for approximately 5 hours, and thereafter diluted with N-methyl-2-pyrrolidone so as to meet a solid content concentration of 20 %. The inherent viscosity of the obtained polyamide-imide resin was 0.71 dl/g and the glass transition temperature was 185°C. The resin composition was TMA/pyromellitic acid/polycaprolactone//IPDI/MDI = 80/15/5//50/50 (molar ratio), the structural formula (I) was 40 mol% and the amide bond/imide bond ratio was 42.1/57.9.

A composite porous film was prepared from this polyamide-imide resin solution in the same manner as Example 8. The film thickness of this composite porous film was 27 μm, the gas permeability was 670 sec/100ccAir, the shutdown temperature was 122°C and the meltdown temperature was 200°C or higher.

[Example 12]

A solution wherein 100 parts of the polyamide-imide resin solution of Example 11 was blended with 20 parts of polyethylene glycol (a number-average molecular weight of 400) was applied on a polyester film of 100 μm so as to meet a film thickness of 25 μm, immersed in a coagulating bath such that water/N-methyl-2-pyrrolidone was 70/30 (weight ratio), washed in water and dried, and peeled off the polyester film to prepare a porous film. The porosity of this porous film was 65 %, the gas permeability was 7.1 sec/100ccAir, the shutdown temperature was 178°C and the meltdown temperature was 186°C.

[Example 13]

A polyolefin porous film (25 μm) manufactured by TonenGeneral Sekiyu K.K. was immersed in a solution wherein 100 parts of the polyamide-imide resin solution of Example 8 was blended with 20 parts of polyethylene glycol (a number-average molecular weight of 400), and thereafter both surfaces of the polyolefin porous film were scraped off with a squeeze roll so as to meet a dried film thickness of 1 μm each, applied to a coagulating bath such that water/polyethylene glycol (a number-average molecular weight of 400) weight ratio was 70/30, and coagulated, washed and dried to obtain a three-layer composite porous film having a thickness of 27 μm. The shutdown temperature of this composite porous film was 120°C and the meltdown temperature was 200°C or higher. Cell performance such as service capacity and cycle durability of a coin cell prepared by using this composite porous film for a separator with the same constitution as Example 8 exhibited similar properties to the case of a polyolefin porous film-alone separator.

[Example 14]

Cell performance such as service capacity and cycle durability of a coin cell wherein a composite film such that a polyolefin porous film was superposed on the polyamide-imide porous film of the composite porous film of polyamideimide/polyolefin prepared in Example 13 was prepared on the same conditions as Example 8 exhibited approximately equal properties to the case of a polyolefin porous film-alone separator.

[Comparative Example 1]

A polyamide-imide resin was synthesized on the same conditions as Example 1 except for modifying TMA into 1.08 mol in Example 1. The inherent viscosity of the obtained polyamide-imide resin was 0.33 dl/g, the glass transition temperature was 350°C, the structural formula (I) was 50 mol% and the amide bond/imide bond ratio was 50/50. A porous film wherein this polyamide-imide resin was used had so low molecular weight as to be fragile and inappropriate for a separator.

[Comparative Example 2]

A polyamide-imide resin was synthesized on the same conditions as Example 1 except for replacing an acid component with 0.15 mol of trimellitic anhydride, 0.85 mol of dimer acid, 0.5 mol of 1,5-naphthalene diisocyanate and 0.49 mol of diphenylmethane-4,4'-diisocyanate. The inherent viscosity of the obtained polyamide-imide resin was 0.64 dl/g, the glass transition temperature was 60°C, the structural formula (I) was 7 mol% and the amide bond/imide bond ratio was 92/8. A porous film was prepared by using this polyamide-imide resin solution in the same manner as Example 5. This porous film was so favorable as to have a film thickness of 23 μm, a porosity of 63 % and a gas permeability of 3.4 sec/100ccAir; however, the shutdown temperature and the meltdown temperature were so low as 75°C and 95°C respectively that safety as a separator was insufficient.

[Comparative Example 3]

A polyamide-imide resin was synthesized on the same conditions as Example 8 except for modifying TMA into 1.05 mol in Example 9. The inherent viscosity of the obtained polyamide-imide resin was 0.31 dl/g and the glass transition temperature was 295°C. The resin composition was TMA/benzophenone tetracarboxylic acid//MDI = 91/9//100 (molar ratio), the structural formula (I) was 91 mol% and the amide bond/imide bond ratio was 45.5/54.5.

A porous film wherein this polyamide-imide resin was used had so low molecular weight as to be fragile and inappropriate for a separator.

[Comparative Example 4]

0.15 mol of TMA, 0.85 mol of dimer acid and 1.02 mol of IPDI were charged together with N-methyl-2-pyrrolidone by using the same apparatus as Example 8 so as to meet a solid content concentration of 50 %, and reacted at a temperature of 180°C for 5 hours. The inherent viscosity of the obtained polyamide-imide resin was 0.63 dl/g and the glass transition temperature was 55°C. The resin composition was TMA/dimer acid//IPDI = 15/85//102 (molar ratio), the structural formula (I) was 0 mol% and the amide bond/imide bond ratio was 92.5/7.5.

A porous film was prepared from this polyamide-imide resin in the same manner as Example 1. This porous film was so favorable as to have a film thickness of 23 μm, a porosity of 67 % and a gas permeability of 340 sec/100ccAir; however, the shutdown temperature and the meltdown temperature were so low as 55°C and 118°C respectively that safety as a separator was insufficient.

[Comparative Example 5]

A commercial separator (a polyolefin porous film manufactured by TonenGeneral Sekiyu K.K.: 25 μm) was used for evaluation. The shutdown temperature and the meltdown temperature were 129°C and 142°C respectively.

**Industrial Applicability**

The present invention can provide a separator for a lithium-ion secondary cell having excellent balance between shutdown properties and meltdown properties by using a porous film of a polyamide-imide resin having a specific structure or a composite porous film wherein a porous film of a polyamide-imide resin and a polyolefin film are laminated.

## Claims

1. A porous film having a thickness of 5 to 100 μm, **characterized by** comprising a porous layer of a polyamide-imide resin having a glass transition temperature of 70°C or higher and an inherent viscosity of 0.5 dl/g or higher and containing a unit represented by the following structural formula (I), an amount of the unit being 20 mol% or more based on all repeating structural units.

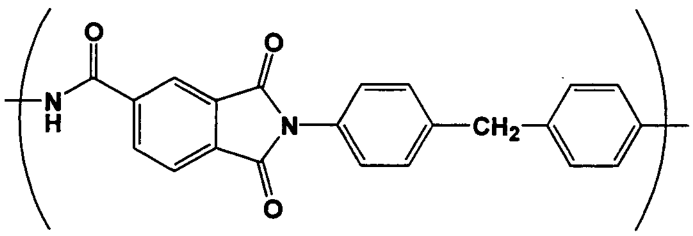

(I)

2. The porous film according to claim 1, wherein the polyamide-imide resin is a copolymer polyamide-imide resin such that a part of an acid component thereof is substituted with at least one kind selected from the group consisting of dimer acid, polyalkylene glycol, polyester and butadiene rubber containing any of a carboxyl group, a hydroxyl group and an amino group at a terminal.

3. The porous film according to claim 1, wherein the porous film of a polyamide-imide resin is a monolayer.

4. A composite porous film **characterized in that** a polyamide-imide resin porous film according to claim 1 and a polyolefin porous film are combined.

5. The porous film according to claim 1, wherein a gas permeability is 1 to 2000 sec/100ccAir.

6. A lithium-ion secondary cell comprising a positive electrode and a negative electrode capable of occluding/releasing a lithium ion and the porous film according to any one of claims 1 to 5 disposed as a separator between the electrodes.

7. A process for producing a porous film, wherein the polyamide-imide resin solution according to claim 1 or 2 is applied

on one surface or both surfaces of a substrate, or a substrate is immersed in the polyamide-imide resin solution according to claim 1 or 2, and thereafter the substrate is applied to a solution to be mingled with a solvent for dissolving the polyamide-imide resin and to be a poor solvent for the polyamide-imide resin to then coagulate the polyamide-imide resin.

**8.** A process for producing a composite porous film, wherein the polyamide-imide resin solution according to claim 1 or 2 is applied on one surface or both surfaces of a polyolefin porous film, or a polyolefin porous film is immersed in the polyamide-imide resin solution according to claim 1 or 2, and thereafter the polyolefin porous film is applied to a solution to be mingled with a solvent for dissolving the polyamide-imide resin and to be a poor solvent for the polyamide-imide resin to then coagulate the polyamide-imide resin.

**9.** A porous film having a thickness of 5 to 100 μm, **characterized by** comprising a porous layer of a polyamide-imide resin having a glass transition temperature of 70°C or higher, an inherent viscosity of 0.5 dl/g or higher and an amide bond/imide bond ratio of from 10/90 to 45/55.

**10.** The porous film according to claim 9, wherein a part of an acid component of the polyamide-imide resin is one kind, or two kinds or more of alkylene glycol bisanhydrotrimellitate, pyromellitic anhydride, benzophenone tetracarboxylic anhydride and biphenyltetracarboxylic anhydride.

**11.** The porous film according to claim 9, wherein the polyamide-imide resin is a copolymer polyamide-imide resin such that a part of an acid component thereof is substituted with at least one kind selected from the group consisting of dimer acid, polyalkylene glycol, polyester and butadiene rubber containing any of a carboxyl group, a hydroxyl group and an amino group at a terminal.

**12.** The porous film according to claim 9, wherein the porous film of a polyamide-imide resin is a monolayer.

**13.** A composite porous film **characterized in that** a polyamide-imide resin porous film according to claim 9 and a polyolefin porous film are combined.

**14.** The porous film according to claim 9, wherein a gas permeability is 1 to 2000 sec/100ccAir.

**15.** A lithium-ion secondary cell comprising a positive electrode and a negative electrode capable of occluding/releasing a lithium ion and the porous film according to any one of claims 9 to 14 disposed as a separator between the electrodes.

**16.** A process for producing a porous film, wherein the polyamide-imide resin solution according to any one of claims 9 to 11 is applied on one surface or both surfaces of a substrate, or a substrate is immersed in the polyamide-imide resin solution according to any one of claims 9 to 11, and thereafter the substrate is applied to a solution to be mingled with a solvent for dissolving the polyamide-imide resin and to be a poor solvent for the polyamide-imide resin to then coagulate the polyamide-imide resin.

**17.** A process for producing a composite porous film, wherein the polyamide-imide resin solution according to any one of claims 9 to 11 is applied on one surface or both surfaces of a polyolefin porous film, or a polyolefin porous film is immersed in the polyamide-imide resin solution according to any one of claims 9 to 11, and thereafter the polyolefin porous film is applied to a solution to be mingled with a solvent for dissolving the polyamide-imide resin and to be a poor solvent for the polyamide-imide resin to then coagulate the polyamide-imide resin.

**INTERNATIONAL SEARCH REPORT**

International application No. PCT/JP2005/002716

A. CLASSIFICATION OF SUBJECT MATTER
Int.Cl[7] C08J9/28, H01M2/16, 10/40

According to International Patent Classification (IPC) or to both national classification and IPC

B. FIELDS SEARCHED

Minimum documentation searched (classification system followed by classification symbols)
Int.Cl[7] C08J9/28, C08G73/14, H01M2/16, 10/40

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>A | JP 63-90533 A (Mitsubishi Chemical Industries Ltd.), 21 April, 1988 (21.04.88), Full text (Family: none) | 1,3-5,7-10, 12-14,16-17<br>2,6,11,15 |
| X<br>A | JP 7-100201 A (Toyobo Co., Ltd.), 18 April, 1995 (18.04.95), Full text (Family: none) | 1-3,7-12,16<br>4-6,13-15,17 |
| A | JP 2003-165863 A (Denso Corp.), 10 June, 2003 (10.06.03), Claims (Family: none) | 1-17 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>20 April, 2005 (20.04.05) | Date of mailing of the international search report<br>17 May, 2005 (17.05.05) |
| Name and mailing address of the ISA/<br>Japanese Patent Office<br>Facsimile No. | Authorized officer<br><br>Telephone No. |

Form PCT/ISA/210 (second sheet) (January 2004)

**INTERNATIONAL SEARCH REPORT**

International application No.
PCT/JP2005/002716

C (Continuation). DOCUMENTS CONSIDERED TO BE RELEVANT

| Category* | Citation of document, with indication, where appropriate, of the relevant passages | Relevant to claim No. |
|---|---|---|
| A | JP 11-35885 A (Hitachi Chemical Co., Ltd.), 09 February, 1999 (09.02.99), Claims (Family: none) | 1-17 |
| P,X | JP 2004-152675 A (Toyobo Co., Ltd.), 27 May, 2004 (27.05.04), Full text (Family: none) | 1-17 |
| P,X | JP 2004-315660 A (Toyobo Co., Ltd.), 11 November, 2004 (11.11.04), Full text (Family: none) | 1-17 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2642206 B
- JP 6212006 A
- JP 8138643 A
- JP 4001692 B
- JP 60000052 A
- JP 61232560 A
- JP 10006453 A